# FASCICULE DE BREVET EUROPEEN

(11) **EP 2 718 144 B1**
(45) Date de publication et mention de la délivrance du brevet: **02.03.2016**
(21) Numéro de dépôt: 12731533.1
(22) Date de dépôt: 06.06.2012
(51) Int. Cl.: B60N 2/30, B60N 2/44, B60R 21/02, B60R 21/06, B60R 7/04

(54) **DISPOSITIF DE PROTECTION D'UN UTILISATEUR DE VEHICULE**
VORRICHTUNG ZUM SCHUTZ EINES FAHRZEUGBENUTZERS
DEVICE FOR PROTECTING A USER OF AVEHCLE

(30) Priorité: 08.06.2011 FR 1154988
(43) Date de publication de la demande: 16.04.2014
(73) Titulaire: PEUGEOT CITROËN AUTOMOBILES SA, 78140 Vélizy-Villacoublay (FR)
(72) Inventeur: REBEL, Vincent, F-75010 Paris (FR)
(86) Numéro de dépôt international: PCT/FR2012/051265
(87) Numéro de publication internationale: WO 2012/168652

(56) Documents cités:
- DE-A1- 10 233 168
- FR-A1- 2 377 901
- FR-A1- 2 692 861
- FR-A1- 2 814 407
- JACOBSON M: "THE RENAULT KANGOO", AUTOMOTIVE ENGINEER, PROFESSIONAL ENGINEERING PUBLISHING, LONDON, GB, vol. 22, no. 10, 1 décembre 1997 (1997-12-01), pages 51-53, XP000724028, ISSN: 0307-6490

## Description

La présente invention concerne de manière générale un dispositif de protection du conducteur ou d'un passager avant d'un véhicule par cloisonnement de l'espace intérieur de la cabine du véhicule automobile.

Il est connu dans l'art antérieur des dispositifs offrant la possibilité de cloisonner l'espace intérieur d'un habitacle de véhicule. En particulier, les documents JP2008230286 et JP2008230288 présentent un véhicule de petite taille comprenant un siège avant pour le conducteur et deux sièges passager agencés en retrait vers l'arrière. De part et d'autre du conducteur, des parois servant de porte verticale à un premier caisson de rangement ou aptes à s'escamoter dans le sol, peuvent être disposées verticalement.et longitudinalement pour cloisonner l'espace latéral du conducteur afin de définir un espace de chargement. En contrepartie, les parois de ce système présentent notamment l'inconvénient de comporter des articulations, ce qui complique leur fabrication et augmente leur coût. Par ailleurs, dans le cas où ces parois servent de porte à un caisson de rangement, leur réagencement pour définir un autre espace de chargement spécifique va compromettre la possibilité d'utiliser le premier caisson de rangement comme rangement indépendant, et dans le cas où les cloisons sont escamotables dans le plancher du véhicule, leur manipulation est compliquée car il faut ouvrir une trappe, sortir les cloisons et les agencer ensuite. En d'autres termes, ces cloisons nécessitent beaucoup de manipulations avant de pouvoir charger les objets à transporter, ces manipulations étant de surcroît difficiles à exécuter en position de conduite. On peut également noter que dans le cas où les cloisons sont escamotables dans le plancher du véhicule, une structure de caisse spécifique est nécessaire. L'offre de cette option va alors compliquer notablement les équipements de fabrication du véhicule. Ensuite, la géométrie proposée des cloisons les rend inaptes à une utilisation dans les véhicules modernes où les formes intérieures ont généralement des géométries complexes et ces cloisons carrées ne pourront pas correctement cloisonner l'espace de chargement. Ainsi, des objets stockés dans l'espace de chargement sur le plancher, pourront éventuellement s'échapper par des passages de communication restés libres entre l'espace de chargement et l'espace réservé au conducteur, ce qui compromet la sécurité lors du roulage, car ces objets en se déplaçant latéralement, pourraient atteindre la cave à pied et gêner la commande des pédales par exemple. Enfin, les cloisons sont indépendantes de la position des sièges et rie peuvent pas s'adapter au positionnement de ces derniers dans le véhicule, si bien que de l'espace peut être perdu en fonction des positions occupées par les sièges.

Le document DE 102 33 168 présente des bandes souples de petite taille montées sur enrouleur et un véhicule munis de points d'ancrage où l'on peut fixer les enrouleurs pour attacher un objet volumineux à transporter. Les bandes décrites ne permettent pas de définir un cloisonnement suffisamment grand pour stocker des objets à transporter en vrac, elles ne peuvent que servir à attacher et maintenir des objets en place, par exemple des bouteilles ou des valises. Par ailleurs, l'architecture des enrouleurs laisse un interstice entre le plancher et la bande souple, de sorte que des objets pourraient passer par ce passage pour s'échapper de l'espace de chargement, avec un risque de gêner ou blesser un occupant ou le conducteur du véhicule en bloquant la commande des pédales. Ensuite, chaque extrémité de la bande souple est reliée à un cylindre droit, et ces cylindres ne sont pas adaptés pour cloisonner correctement un espace défini par des formes complexes telles que la surface d'une planche de bord par exemple. Enfin, le système décrit prévoit d'agencer de multiples trous d'interface pour positionner les dérouleurs dans le véhicule, ce qui affecte fortement l'aspect visuel et ces trous constituent autant de cavités où peut se loger de la poussière

Un but de la présente invention est de répondre aux inconvénients des documents de l'art antérieur mentionnés ci-dessus et en particulier, tout d'abord, de proposer un dispositif de protection d'un utilisateur contre le ripage de charges stockées dans un espace de chargement situé latéralement par rapport à l'utilisateur. Ce dispositif selon l'invention permet d'empêcher le mouvement des objets transportés vers l'utilisateur tout en restant simple à manipuler, et économique à fabriquer.

Pour cela un premier aspect de l'invention concerne un dispositif de protection d'un utilisateur de véhicule assis sur un premier siège avant agencé dans une cabine définissant un espace intérieur, le dispositif de protection comprenant des moyens de cloisonnement aptes à séparer l'espace intérieur de la cabine en un premier espace utilisateur et un deuxième espace de chargement, l'espace de chargement étant obtenu à partir d'un espace laissé libre par l'escamotage d'un second siège avant, adjacent au premier siège et les moyens de cloisonnement cloisonnant l'espace libre de chargement ainsi obtenu, caractérisé en ce que les moyens de cloisonnement sont agencés de manière indépendante du siège escamoté, dans l'espace intérieur de la cabine, en étant apte à être déployés suivant une direction parallèle à l'axe longitudinal du véhicule, le long de la surface de chargement, correspondant à la surface de l'espace laissé libre après escamotage du siège, formant plancher, vers la planche de bord jusqu'à fermer complètement l'espace de chargement de manière à interdire tout passage entre l'espace de chargement et l'espace réservé à l'utilisateur pour des objets stockés sur le plancher.

L'invention propose avantageusement de réutiliser l'espace laissé libre par le second siège escamoté pour définir un espace de chargement distinct de l'espace réservé à l'utilisateur et sécurise le transport des objets stockés sur la surface de chargement de l'espace de chargement formant plancher, en cloisonnant cet espace depuis le plancher. Ainsi, le cloisonnement optimisé en fonction de l'escamotage du second siège, permet de sécuriser l'espace réservé à l'utilisateur en prévenant le ripage latéral, vers l'utilisateur, des objets stockés sur le plancher.

De manière avantageuse, les moyens de cloisonnement partent du plancher de la cabine et ont une hauteur supérieure à l'assise du premier siège une fois mis en place dans la cabine. Cette mise en oeuvre de l'invention permet avantageusement d'augmenter les possibilités de stockage et de transport du véhicule, sans modification conséquente de son architecture, mais tout en garantissant la sécurité de l'utilisateur, dont l'espace alloué reste distinct de l'espace de chargement.

Avantageusement, le véhicule comprend une planche de bord d'une forme prédéfinie, les moyens de cloisonnement sont une paroi souple agencée pour être apte à définir l'espace de chargement en coopération avec la forme prédéfinie de la planche de bord et la paroi souple comporte des moyens d'accrochage aptes à la maintenir en place dans la cabine. Les moyens de cloisonnement sont économiques à fabriquer et sont aisés à manipuler. La fonction de cloisonnement est bien obtenue, car les moyens de cloisonnement s'adaptent parfaitement sur la forme prédéfinie de la planche de bord, il n'y a donc pas de passage libre entre l'espace réservé à l'utilisateur et l'espace de chargement. On peut également noter que ce sont les moyens de cloisonnement qui s'adaptent à la planche de bord et non l'inverse, ce qui est plus simple et moins couteux pour offrir l'option sur le véhicule : c'est l'option ajoutée qui est conçue en fonction du véhicule et non le contraire. Les moyens d'accrochage garantissent un maintien en place sécurisé de la toile souple et celle-ci pourra donc maintenir les charges transportées dans l'espace de chargement.

Avantageusement, les moyens de cloisonnement sont une toile apte à se plier en accordéon. La toile selon l'invention est pratique à manipuler et économique à fabriquer, tout en fournissant une raideur supplémentaire grâce à sa mise en forme en accordéon.

Avantageusement, les moyens de cloisonnement sont aptes à être rangés dans un caisson de rangement de la cabine. L'utilisateur peut facilement ranger la toile pour éviter de la perdre.

En alternative, le dispositif comprend un enrouleur et la paroi souple est apte à être enroulée sur l'enrouleur lorsque le second siège est en position normale d'utilisation. L'enrouleur selon l'invention est très pratique à utiliser et s'il n'y a pas besoin de cloisonner un espace de chargement lorsque le second siège en en position normale d'utilisation, le rangement de la paroi souple est réalisé très rapidement. Par ailleurs, un tel enrouleur assurera une tension permanente sur la toile souple, quelles que soient les dimensions de la cabine. On pourra alors utiliser ce dispositif pour plusieurs modèles avec des dimensions différentes, ou autoriser de larges tolérances de fabrication, la toile sera toujours tendue par l'enrouleur.

En alternative, les moyens de cloisonnement sont une toile souple amovible comportant au moins deux moyens, d'accrochage aptes à fixer la toile souple sur la cabine. Cette mise en oeuvre est très économique et on peut envisager d'avoir quatre moyens d'accrochage.

Un second aspect de l'invention est un véhicule comprenant une cabine définissant un espace intérieur avec au moins un premier siège, un second siège escamotable adjacent au premier siège, un plancher, un caisson de rangement et une planche dé bord avec une forme prédéfinie, caractérisé en ce que le véhicule comprend un dispositif de protection tel que décrit ci-dessus et en ce que l'espace de chargement laissé libre par l'escamotage du second siège communique par une ouverture de communication avec un espace de chargement principal agencé derrière la cabine.

L'invention propose de cloisonner l'espace intérieur d'une cabine comportant une communication avec un espace de rangement principal situé à l'arrière de la cabine. On peut donc étendre l'espace de chargement principal vers l'intérieur de la cabine, tout en prévenant le ripage des charges placées dans la cabine.

En particulier, l'invention porte sur un véhicule comprenant une cabine définissant un espace intérieur avec au moins un premier siège, un second siège escamotable adjacent au premier siège, un plancher, un caisson de rangement et une planche de bord avec une forme prédéfinie, caractérisé en ce que le véhicule comprend un dispositif de protection avec enrouleur, et en ce que l'enrouleur est agencé dans la planche de bord. L'enrouleur intégré dans la planche de bord permet de minimiser l'impact visuel de l'invention dans l'habitacle. Par ailleurs, l'enrouleur n'empiète pas sur l'habitabilité du véhicule.

En alternative, l'enrouleur est agencé dans le plancher. Cette mise en oeuvre est également sans impact sur l'habitabilité du véhicule et ne constitue pas un obstacle protubérant en relief sur le plancher, de sorte que les pieds des utilisateurs ne peuvent pas buter sur l'enrouleur en position non déployée. On peut envisager d'insérer une baleine ou un élément rigide à l'extrémité supérieure de la paroi souple pour améliorer sa tenue en position déployée.

En alternative, l'enrouleur est agencé sur une face latérale du premier siège, adjacente au second siège. Dans cette mise en oeuvre, l'enrouleur est agencé directement sur le siège qui reste en place, il n'y a donc que ce dernier à modifier si l'utilisateur désire équiper son véhicule avec un dispositif selon l'invention. Par ailleurs, on peut envisager d'agencer l'enrouleur à l'arrière du premier siège, de sorte que l'enrouleur est invisible tant que le second siège en en position normale d'utilisation.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une cabine 100 d'un véhicule utilitaire équipé d'une première mise en oeuvre de l'invention ;
- la figure 2 représente la cabine 100 de la figure 1 dans une configuration particulière ;
- la figure 3 représente la cabine 100 avec une deuxième mise en oeuvre de l'invention ;
- la figure 4, représente une troisième mise en oeuvre de l'invention.

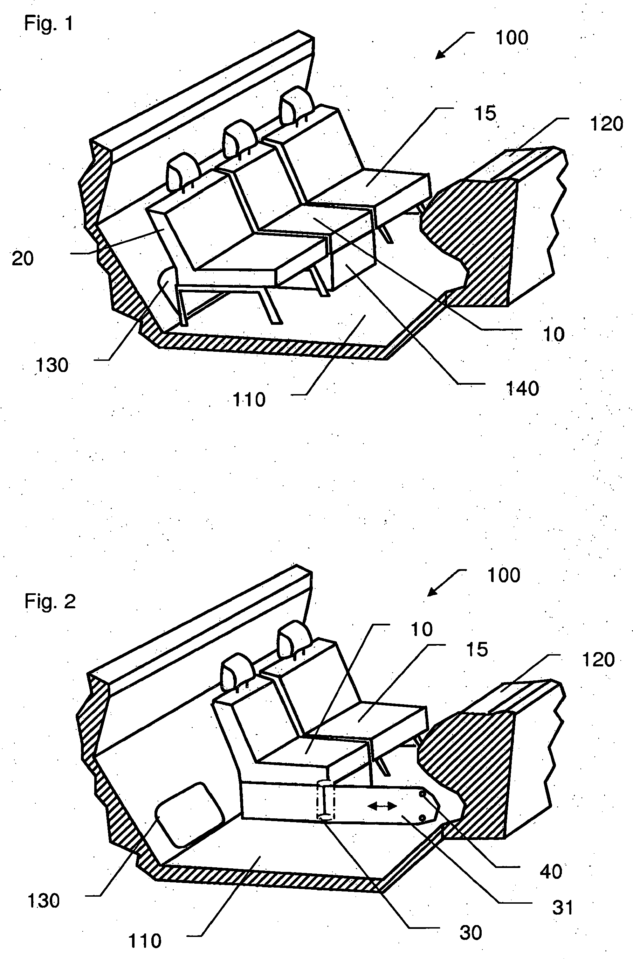

La figure 1 représente une cabine 100 d'un véhicule utilitaire. Trois sièges 10, 15, 20 sont agencés en rangée, sur un plancher 110 et derrière une planche de bord 120. Une trappe 130 derrière le siège 20 permet d'ouvrir ou fermer une communication avec l'espace de chargement situé derrière les sièges. Le siège 10 repose sur un caisson de rangement et contient un enrouleur, décrit plus précisément au paragraphe relatif à la figure 2.

La figure 2 représente la cabine 100 de la figure 1 avec le siège 20 escamoté pour transporter des objets à l'emplacement du siège 20. On peut envisager d'escamoter le siège 20 dans le plancher ou même de le retirer de la cabine 100. Pour sécuriser l'espace réservé aux utilisateurs des sièges 10 et 15, la toile souple 31 stockée dans l'enrouleur 30 est sortie et déployée vers la planche de bord 120, selon une direction parallèle à l'axe longitudinal du véhicule, de sorte à former une cloison longitudinale séparant l'espace de chargement situé à l'emplacement du siège 20 escamoté de l'espace réservé aux occupants assis sur les sièges 10 et 15. La toile comporte des moyens d'accrochage 40, des oeillets par exemple, pour fixer la toile souple 31 sur la planche de bord 120. Enfin, l'extrémité de la toile souple 31 est agencée de sorte à ne laisser aucun espace entre celle-ci et la planche de bord 120 lorsqu'elle est mise en position de cloisonnement. A cet effet, l'extrémité est la contre forme du profil de la planche de bord 120. On peut envisager de rigidifier par un jonc ou une baleine cette extrémité afin d'avoir une séparation correcte ente l'espace de chargement et l'espace réservé aux occupants.

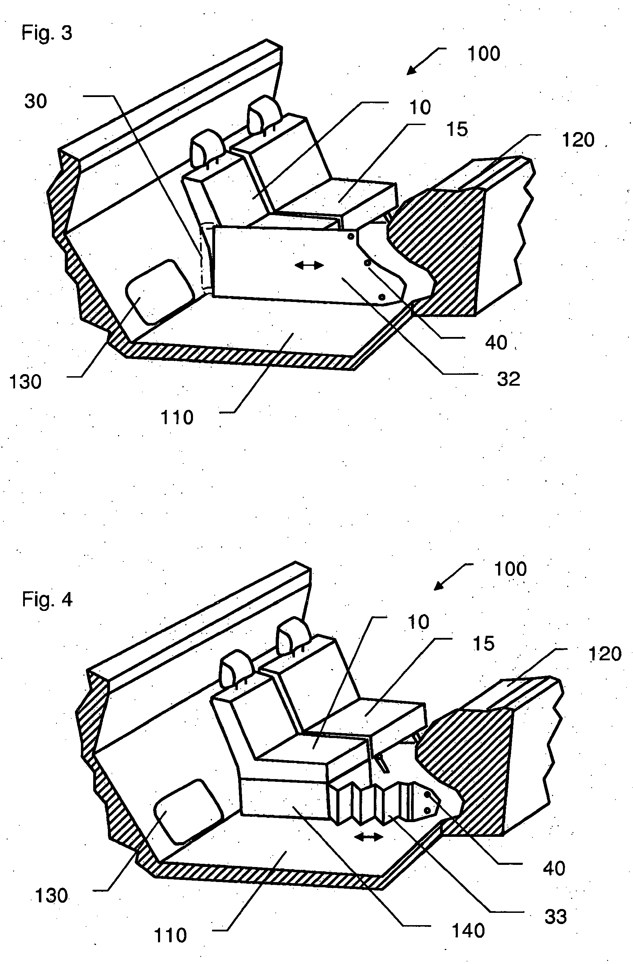

La figure 3 représente une variante de la mise en oeuvre de la figure 2. L'enrouleur 30 est agencé en arrière du siège 10 et sa hauteur est plus importante que la hauteur de l'assise du siège 10. En conséquence, lorsque le siège 20 est escamoté, la mise en place de la toile souple 32 conduit à définir un espace de chargement plus important. De la même manière, la toile souple 32 est agencée de manière à ce que son extrémité libre soit la contre forme du profil de la planche de bord 120, afin de ne pas laisser de passage entre la toile souple et la planche de bord.

La figure 4 représente une variante des mises en oeuvre précédentes, où la paroi souple est une toile en accordéon 33. Cette mise en oeuvre est rapide à mettre en place et offre une rigidité supplémentaire par les plis en accordéon. On peut également envisager de prévoir la toile 33 amovible par rapport au siège 10 et la ranger dans le caisson de rangement 140 situé sous le siège 10 lorsque le siège 20 est en position normale d'utilisation et qu'il n'y a pas besoin de cloisonner l'espace de la cabine.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, on peut également envisager d'utiliser pour réaliser la paroi souple un filet.

## Revendications

1. Véhicule comprenant un premier siège avant (10), un second siège avant (20), une cabine espace de chargement (100) et un espace laissé libre par l'escamotage du second siège avant et un dispositif de protection d'un utilisateur du véhicule assis sur le premier siège avant (10) agencé dans la cabine (100) définissant l'espace intérieur, le dispositif de protection comprenant des moyens de cloisonnement (31 ; 32 ; 33) aptes à séparer l'espace intérieur de la cabine en un premier espace utilisateur et un deuxième espace de chargement, l'espace de chargement étant obtenu à partir d'un espace laissé libre par l'escamotage d'un second siège avant (20), adjacent au premier siège (10) et les moyens de cloisonnement (31 ; 32 ; 33) cloisonnant l'espace libre de chargement ainsi obtenu, **caractérisé en ce que** les moyens de cloisonnement (31 32 ; 33) sont agencés de marnière indépendante du siège escamoté (20), dans l'espace intérieur de la cabine, en étant apte à être déployés suivant une direction parallèle à l'axe longitudinal du véhicule, le long de la surface de chargement (110), correspondant à la surface dé l'espace laissé libre après escamotage du siège (20), formant plancher, vers la planche de bord jusqu'à fermer complètement l'espace de chargement de manière à interdire tout passage entre l'espace de chargement et l'espace réservé à l'utilisateur pour des objets stockés sur le plancher (110).

2. Véhicule selon la revendication 1, **caractérisé en ce que** les moyens de cloisonnement (31 ; 32 ; 33) partent du plancher (110) et ont une hauteur supérieure à l'assise du premier siège (10) une fois les moyens de cloisonnement déployés.

3. Véhicule selon l'une des revendications 1 ou 2, le véhicule comprenant une planche de bord (120) d'une forme prédéfinie, **caractérisé en ce que** les moyens de cloisonnement (31 ; 32 ; 33) sont une paroi souple agencée pour être apte à définir l'espace de chargement en coopération avec la forme prédéfinie de la planche de bord (120), et **en ce que** la paroi souple comporte des moyens d'accrochage aptes à la maintenir en place dans la cabine.

4. Véhicule selon l'une des revendications 1 à 3, **caractérisé en ce que** les moyens de cloisonnement sont une toile (33) apte à se plier en accordéon.

5. Véhicule selon l'une des revendications 1 à 4, **caractérisé en ce que** les moyens de cloisonnement (31 ; 32 ; 33) sont aptes à être rangés dans un caisson de rangement de la cabine.

6. Véhicule selon la revendication 3, **caractérisé en ce qu'**il comprend un enrouleur (30) et **en ce que** la paroi souple est apte à être enroulée sur l'enrouleur (30) lorsque le second siège (20) est en position normale d'utilisation.

7. Véhicule comprenant une cabine (100) définissant un espace intérieur avec au moins un premier siège (10), un second siège (20) escamotable adjacent au premier siège (10), un plancher (110), un caisson de rangement (140) et une planche de bord (120) avec une forme prédéfinie, **caractérisé en ce que** le véhicule est un véhicule selon l'une des revendications 1 à 6 et **en ce que** l'espace de chargement laissé libre par l'escamotage du second siège (20) communique par une ouverture de communication (130) avec un espace de chargement principal agencé derrière la cabine.

8. Véhicule comprenant une cabine (100) définissant un espace intérieur avec au moins un premier siège (10), un second siège (20) escamotable adjacent au premier siège (10), un plancher (110) et une planche de bord (120) avec une forme prédéfinie, **caractérisé en ce que** le véhicule est un véhicule selon la revendication 6, et **en ce que** l'enrouleur (20) est agencé dans la planche de bord (120).

9. Véhicule comprenant une cabine (100) définissant un espace intérieur avec au moins un premier siège (10), un second siège (20) escamotable adjacent au premier siège (10), un plancher (110) et une planche de bord (120) avec une forme prédéfinie, **caractérisé en ce que** le véhicule est un véhicule la revendication 6, et **en ce que** l'enrouleur (30) est agencé dans le plancher (110).

10. Véhicule comprenant une cabine (100) définissant un espace intérieur avec au moins un premier siège (10), un second siège (20) escamotable adjacent au premier siège (10), un plancher (110) et une planche de bord (120) avec une forme prédéfinie, **caractérisé en ce que** le véhicule est un véhicule selon la revendication 6, et **en ce que** l'enrouleur (30) est agencé sur une face latérale du premier siège (10), adjacente au second siège (20).

## Patentansprüche

1. Fahrzeug umfassend einen ersten Vordersitz (10), einen zweiten Vordersitz (20), einen Laderaum (100) und einen freigelassenen Raum durch Umklappen des zweiten Vordersitzes und eine Schutzvorrichtung für einen Benutzer des Fahrzeugs, der auf dem ersten Vordersitz (10) sitzt, der in der Kabine (100) zur Definition des Innenraums angeordnet ist, wobei die Schutzvorrichtung Trennmittel (31, 32, 33) zur Abtrennung des Innenraum der Kabine in einen ersten Benutzerraum und in einen zweiten Laderaum umfasst, wobei der Laderaum durch einen freigelassenen Raum durch Umklappen eines zweiten Vordersitzes (20) neben dem ersten Sitz (10) erhalten wird, und die Trennmittel (31, 32, 33) den damit erhaltenen freien Laderaum abtrennen, **dadurch gekennzeichnet, dass** die Trennmittel (31, 32, 33) unabhängig vom umgeklappten Sitz (20) im Innenraum der Kabine angeordnet sind, indem sie in einer parallelen Richtung zur Längsachse des Fahrzeugs entlang der Ladefläche (410), entsprechend der Fläche des freigelassenen Raums nach Umklappen des Sitzes (20), die den Boden bildet, zum Armaturenbrett entfaltet werden, bis der Laderaum vollständig abgeschlossen ist, damit der Durchgang der auf dem Boden (110) abgestellten Gegenstände zwischen dem Laderaum und dem für den Benutzer vorbehaltenen Raum verhindert ist.

2. Fahrzeug nach dem Anspruch 1, **dadurch gekennzeichnet, dass** die Trennmittel (31, 32, 33) vom Boden (110) ausgehen und eine größere Höhe haben als der erste Sitz (10), nachdem die Trennmittel entfaltet sind.

3. Fahrzeug nach einem der Ansprüche 1 oder 2, das Fahrzeug umfassend ein Armaturenbrett (120) mit einer vordefinierten Form, **dadurch gekennzeichnet, dass** die Trennmittel (31, 32, 33) eine flexible Wand sind, die derart angeordnet ist, dass sie den Laderaum zusammen mit der vordefinierten Form des Armaturenbretts (120) bilden kann, und dass die flexible Wand Befestigungsmittel umfasst, mit der sie in der Kabine befestigt werden kann.

4. Fahrzeug nach einem der Ansprüche 1 bis 3, **dadurch gekennzeichnet, dass** die Trennmittel eine Leinwand (33) sind, die zusammengefaltet werden kann.

5. Fahrzeug nach einem der Ansprüche 1 bis 4, **dadurch gekennzeichnet, dass** die Abtrennmittel (31, 32, 33) dazu geeignet sind, in einem Ablagefach der Kabine aufbewahrt zu werden.

6. Fahrzeug nach dem Anspruch 3, **dadurch gekennzeichnet, dass** es eine Aufrollvorrichtung (30) umfasst und dass flexible Trennwand auf der Aufrollvorrichtung (30) aufgerollt wird, wenn sich der zweite Sitz (20) in normaler Benutzungsposition befindet.

7. Fahrzeug umfassend eine Kabine (100) zur Definition eines Innenraums mit mindestens einem ersten Sitz (10), einem zweiten klappbaren Sitz (20) neben dem ersten Sitz (10), einem Boden (110), einem Ablagefach (140) und einem Armaturenbrett (120) mit einer vordefinierten Form, **dadurch gekennzeichnet, dass** das Fahrzeug ein Fahrzeug nach einem der Ansprüche 1 bis 6 ist, und dass der freigelassene Laderaum zum Umklappen des zweiten Sitzes (20) durch eine Verbindungsöffnung (130) mit einem Hauptladeraum angeordnet hinter der Kabine verbunden ist.

8. Fahrzeug umfassend eine Kabine (100) zur Definition eines Innenraums mit mindestens einem ersten Sitz (10), einem zweiten klappbaren Sitz (20) neben dem ersten Sitz (10), einem Boden (110) und einem Armaturenbrett (120) mit einer vordefinierten Form, **dadurch gekennzeichnet, dass** das Fahrzeug ein Fahrzeug nach dem Anspruche 6 ist, und dass die Aufrollvorrichtung (20) im Armaturenbrett (120) angeordnet ist.

9. Fahrzeug umfassend eine Kabine (100) zur Definition eines Innenraums mit mindestens einem ersten Sitz (10), einem zweiten klappbaren Sitz (20) neben dem ersten Sitz (10), einem Boden (110) und einem Armaturenbrett (120) mit einer vordefinierten Form, **dadurch gekennzeichnet, dass** das Fahrzeug ein Fahrzeug nach dem Anspruche 6 ist, und dass die Aufrollvorrichtung (30) im Boden (110) angeordnet ist.

10. Fahrzeug umfassend eine Kabine (100) zur Definition eines Innenraums mit mindestens einem ersten Sitz (10), einem zweiten klappbaren Sitz (20) neben dem ersten Sitz (10), einem Boden (110) und einem Armaturenbrett (120) mit einer vordefinierten Form, **dadurch gekennzeichnet, dass** das Fahrzeug ein Fahrzeug nach dem Anspruche 6 ist, und dass die Aufrollvorrichtung (30) auf einer Seite des ersten Sitzes (10) neben dem zweiten Sitz (20) angeordnet ist.

## Claims

1. Vehicle comprising a first front seat (10), a second front seat (20), a loading-space cabin (100) and a space left free by the folding of the second front seat, and a device for protecting a user of the vehicle seated on the first front seat (10) arranged in the cabin (100) defining the internal space, the protective device comprising partitioning means (31; 32; 33) able to separate the internal space of the cabin into a first user space and a second loading space, the loading space being obtained from a space left free by the folding of the second front seat (20), adjacent to the first seat (10) and the partitioning means (31; 32; 33) partitioning the free loading space thus obtained, **characterised in that** the partitioning means (31; 32; 33) are arranged independently of the folded sear (20), in the internal space of the cabin, while being able to be deployed in a direction parallel to the longitudinal axis of the vehicle, along the loading surface (410), corresponding to the surface of the space left free after folding of the seat (20), forming a floor, towards the dashboard until it completely closes the loading space so as to prevent any passage between the loading space and the space reserved for the user for objects stored on the floor (110).

2. Vehicle according to claim 1, **characterised in that** the partitioning means (31; 32; 33) start from the floor (110) and have a height greater than the squab of the first seat (10) once the partitioning means have been deployed.

3. Vehicle according one of claims 1 or 2, the vehicle comprising a dashboard (120) with a predefined shape, **characterised in that** the partitioning means (31; 32; 33) are a flexible wall arranged so as to be able to define the loading space in cooperation with the predefined shape of the dashboard (120), and **in that** the flexible wall comprises attachment means able to hold it in place in the cabin.

4. Vehicle according to one of claims 1 to 3, **characterised in that** the partitioning means are a fabric (33) able to fold in a concertina.

5. Vehicle according to one of claims 1 to 4, **characterised in that** the partitioning means (31; 32; 33) are able to be stored in a storage compartment in the cabin.

6. Vehicle according to claim 3, **characterised in that** it comprises a reel (30) and **in that** the flexible wall is able to be coiled on the reel (30) when the second seat (20) is in the normal position of use.

7. Vehicle comprising a cabin (100) defining an interior space with at least a first seat (10), a foldable second seat (20) adjacent to the first seat (10), a floor (110), a storage compartment (140) and a dashboard (120) with a predefined shape, **characterised in that** the vehicle is a vehicle according to one of claims 1 to 6 and **in that** the loading space left free by the folding of the second seat (20) communicates through a communication opening (130) with a main loading space arranged behind the cabin.

8. Vehicle comprising a cabin (100) defining an interior space with at least a first seat (10), a foldable second seat (20) adjacent to the first seat (10), a floor (110), and a dashboard (120) with a predefined shape, **characterised in that** the vehicle is a vehicle according to claim 6, and **in that** the reel (20) is arranged in the dashboard (120).

9. Vehicle comprising a cabin (100) defining an interior space with at least a first seat (10), a foldable second seat (20) adjacent to the first seat (10), a floor (110), and a dashboard (120) with a predefined shape, **characterised in that** the vehicle is a vehicle according to claim 6, and **in that** the reel (30) is arranged in the floor (110).

10. Vehicle comprising a cabin (100) defining an interior space with at least a first seat (10), a foldable second seat (20) adjacent to the first seat (10), a floor (110), and a dashboard (120) with a predefined shape, **characterised in that** the vehicle is a vehicle according to claim 6, and **in that** the reel (30) is arranged on a lateral face of the first seat (10), adjacent to the second seat (20).
